(19) Europäisches Patentamt
European Patent Office
Office européen des brevets

(11) **EP 4 249 735 B1**

(12) **EUROPEAN PATENT SPECIFICATION**

(45) Date of publication and mention
of the grant of the patent:
**23.10.2024 Bulletin 2024/43**

(21) Application number: **23163442.9**

(22) Date of filing: **22.03.2023**

(51) International Patent Classification (IPC):
*F01N 3/20* $^{(2006.01)}$      *F01N 9/00* $^{(2006.01)}$

(52) Cooperative Patent Classification (CPC):
**F01N 3/2006; F01N 9/00;** F01N 2900/0412;
F01N 2900/0418; F01N 2900/0602; F01N 2900/08;
F01N 2900/10; F01N 2900/102; F01N 2900/1602;
Y02T 10/12

(54) **AFTERTREATMENT CONTROL SYSTEM AND METHOD**

NACHBEHANDLUNGSSTEUERUNGSSYSTEM UND -VERFAHREN

SYSTÈME ET PROCÉDÉ DE COMMANDE DE POST-TRAITEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.03.2022 GB 202204099**

(43) Date of publication of application:
**27.09.2023 Bulletin 2023/39**

(73) Proprietor: **Jaguar Land Rover Limited
Coventry, Warwickshire CV3 4LF (GB)**

(72) Inventors:
• **Maugham, Robin
Coventry, CV3 4LF (GB)**

• **Jennings, James
Coventry, CV3 4LF (GB)**

(74) Representative: **Jaguar Land Rover Patents
Department
Patents Department W/1/073
Abbey Road, Whitley
Coventry CV3 4LF (GB)**

(56) References cited:
**EP-B1- 3 163 042          WO-A1-2022/051035
DE-A1- 102018 208 980     DE-A1- 102019 008 954
DE-B4- 102020 103 565     FR-A1- 3 109 798**

**Description**

**TECHNICAL FIELD**

The present disclosure relates to an aftertreatment control system and method. Aspects of the invention relate to a control system for controlling heating of an aftertreatment system, a vehicle and a method of controlling heating of an aftertreatment system.

**BACKGROUND**

It is known to provide an aftertreatment system for treating exhaust gas emitted from an internal combustion engine of a vehicle. The aftertreatment system is operative to remove nitrogen oxide(s) ($NO_x$) and carbon dioxide ($CO_2$) from the exhaust gases. The effectiveness of $NO_x$ reduction technologies is primarily controlled by operation of the internal combustion engine, and this is supplemented through calibration action. In known systems, the calibration action is defined to ensure effective removal of the nitrogen oxide(s) ($NO_x$) irrespective of the driving conditions of the vehicle. However, the calibration action may incur a carbon dioxide ($CO_2$) cost. The current calibration strategy is typically defined to ensure a very high efficiency in removing the nitrogen oxide(s) ($NO_x$), but this may result in an unnecessary carbon dioxide ($CO_2$) cost in certain operating conditions. The emissions species may not have been minimised together. FR3109798A1 discloses a method for managing the priming of a motor vehicle exhaust gas aftertreatment device. DE102018208980A1 discloses a process for heating a catalyst. WO2022/051035A1 discloses systems and methods for controlling a hybrid system based on temperature zone and power demand. DE102019008954A1 discloses a method for heating an exhaust gas aftertreatment device of a motor vehicle, in particular a hybrid vehicle. DE102020103565B4 discloses a process for exhaust aftertreatment of an internal combustion engine. EP3163042B1 discloses a method for supplying power to a device for heating the exhaust gases of a drive train of a motor vehicle and associated vehicle.

It is an aim of the present invention to address one or more of the disadvantages associated with the prior art.

**SUMMARY OF THE INVENTION**

Aspects and embodiments of the invention provide a control system for controlling heating of an aftertreatment system, a vehicle, a method of controlling heating of an aftertreatment system, and a non-transitory computer-readable medium as claimed in the appended claims.

According to an aspect of the present invention there is provided a control system for controlling heating of an aftertreatment system for treating exhaust gas emitted from an internal combustion engine of a vehicle, the control system comprising at least one controller configured to:

determine an energy usage per unit time for the vehicle;
determine an energy usage per unit distance travelled by the vehicle; and
set an exhaust heating setpoint for the aftertreatment system in dependence on the determined energy usage per unit time and the energy usage per unit distance. The control system determines the exhaust heating setpoint in dependence on the determined energy usage per unit time and per unit distance. At least in certain embodiments, this enables the control system to assess the current driving conditions of the vehicle and to set the exhaust heating setpoint accordingly. The exhaust heating setpoint may be adjusted dynamically in dependence on the determined energy usage per unit time and per unit distance. At least in certain embodiments, the exhaust heating setpoint defines a target temperature of the aftertreatment system. The exhaust heating setpoint is determined to promote treatment of the exhaust gases emitted from the internal combustion engine.

The at least one controller may be configured to output the exhaust heating setpoint to an engine control unit configured to control operation of the internal combustion engine. The engine control unit may control operation of the internal combustion engine to control heating of the aftertreatment system. The engine control unit may control operation of the internal combustion engine to increase or decrease the temperature of the exhaust gases. The temperature of the aftertreatment system may thereby be controllably increased or decreased to achieve the exhaust heating setpoint.

The exhaust heating setpoint may be defined as discrete value, for example as a discrete target temperature. Alternatively, the exhaust heating setpoint may be defined as a range, for example by an upper threshold and/or a lower threshold.

Alternatively, the at least one controller may be configured to output the exhaust heating setpoint to a heater control unit to control heating of the aftertreatment system. For example, the aftertreatment system may comprise an electrical heater. The heater control unit may control heating operation of the electrical heater in dependence on the exhaust heating setpoint.

The at least one controller may be configured to determine the energy usage per unit distance in respect of a first distance travelled by the vehicle. The at least one controller may determine the energy usage per unit time in respect of a first time period. At least in certain embodiments, the first time period may correspond to the time period during which the vehicle travelled the first distance.

The at least one controller may be configured to set the exhaust heating setpoint for the aftertreatment system in inverse proportion to the determined energy usage per unit time. The at least one controller may be configured to set the exhaust heating setpoint for the aftertreatment system in direct proportion to the determined energy usage per unit distance.

The at least one controller may comprise a driving condition map defining a relationship between the energy usage per unit time and the energy usage per unit distance. The driving condition map may be predefined.

The exhaust heating setpoint may be mapped to the driving condition map. The driving condition map may define the relationship between each of the following: the energy usage per unit time; the energy usage per unit distance; and the exhaust heating setpoint. The driving condition map may be represented in a three-dimensional Cartesian coordinate system. The energy usage per unit time, the energy usage per unit distance, and the exhaust heating setpoint may be defined on respective axis of the coordinate system.

The at least one controller may be configured to determine the exhaust heating setpoint by cross-referencing the determined energy usage per unit time and the determined energy usage per unit distance to the driving condition map.

The driving condition map may define a first zone representing vehicle operating conditions where the nitrogen oxide(s) (NOx) emissions are above a threshold emission level. The at least one controller may be configured to increase the exhaust heating setpoint in dependence on identifying that the current driving condition map corresponds to the first zone of the driving condition map.

The at least one controller may be configured to reference the driving condition map to characterise a current driving condition of the vehicle in dependence on the energy usage per unit time and the energy usage per unit distance. The at least one controller may reference the driving condition map to determine the current driving condition.

The driving condition map define at least a first driving condition threshold representing vehicle operating conditions. The first driving condition threshold may represent vehicle operating conditions resulting in relatively high nitrogen oxide(s) (NOx) emissions. The first driving condition threshold may represent vehicle operating conditions in which the emission of nitrogen oxide(s) (NOx) is above a threshold emission level.

The at least one controller may be configured to apply a control function to set the exhaust heating setpoint in dependence on a relationship between the current driving condition and the first driving condition threshold. For example, the control function may set the exhaust heating setpoint in dependence on a difference between the current driving condition and the first driving condition threshold. The difference may, for example, represent the shortest distance from the current driving condition to the first driving condition threshold.

The at least one controller may set the exhaust heating setpoint for the aftertreatment system after the vehicle has travelled a predetermined minimum distance in a current journey. This may reduce or avoid inaccurate assessments of the energy usage per unit time and/or per unit distance, for example at the start of the current journey where limited data is available.

The at least one controller may comprise at least one electronic processor and a system memory. The at least one electronic processor may comprise at least one input for receiving one or more vehicle operating parameter; and at least one output for outputting the exhaust heating setpoint.

The energy usage of the vehicle may be determined as follows:

$$\text{Energy (kJ)} = \int(\text{engine speed} * \text{torque}/1000)$$

Where:

    engine speed is measured in radians per second (rad/s);
    torque in Newton metres (Nm);
    integral is from 0 to n.

The torque may, for example, be the torque at the clutch. The torque may be modelled, for example by an engine control unit.

The calculated energy may be converted to revolutions per second and from Joules (J) to Kilojoules (kJ).

According to a further aspect of the present invention there is provided a vehicle comprising a control system as described herein.

According to an aspect of the present invention there is provided a method of controlling heating of an aftertreatment system for treating exhaust gas emitted from an internal combustion engine of a vehicle, the method comprising:

determining an energy usage per unit time for the vehicle;
determining an energy usage per unit distance travelled by the vehicle; and
setting an exhaust heating setpoint for the aftertreatment system in dependence on the determined energy usage per unit time and the energy usage per unit distance. The method may be implemented by a computer. The computer may comprise at least one electronic processor.

According to a further aspect of the present invention there is provided a non-transitory computer-readable medium having a set of instructions stored therein which, when executed, cause a processor to perform the method(s) described herein.

Any control unit or controller described herein may suitably comprise a computational device having one or more electronic processors. The system may comprise a single control unit or electronic controller or alternatively different functions of the controller may be embodied in, or hosted in, different control units or controllers. As used herein the term "controller" or "control unit" will be understood to include both a single control unit or controller and a plurality of control units or controllers collectively operating to provide any stated control functionality. To configure a controller or control unit, a suitable set of instructions may be provided which, when executed, cause said control unit or computational device to implement the control techniques specified herein. The set of instructions may suitably be embedded in said one or more electronic processors. Alternatively, the set of instructions may be provided as software saved on one or more memory associated with said controller to be executed on said computational device. The control unit or controller may be implemented in software run on one or more processors. One or more other control unit or controller may be implemented in software run on one or more processors, optionally the same one or more processors as the first controller. Other suitable arrangements may also be used.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

## BRIEF DESCRIPTION OF THE DRAWINGS

The present invention is defined by the appended claims with reference to the accompanying drawings, in which:

Figure 1 shows a schematic representation of a road vehicle incorporating a control system for controlling heating of an aftertreatment system in accordance with an embodiment of the present invention;
Figure 2 shows a schematic representation of a controller of the control system shown in Figure 1;
Figure 3 shows a driving condition map implemented by the control system in accordance with an embodiment of the present invention;
Figure 4 shows a first graph representing operation of the vehicle in a first scenario;
Figure 5 shows a second graph representing operation of the vehicle in a second scenario, the exhaust heating setpoint being increased to maintain the temperature of the aftertreatment system above a threshold;
Figure 6 shows a third graph representing operation of the vehicle in the first scenario shown in Figure 4 with the exhaust heating setpoint modified for operation in the second scenario;
Figure 7 shows a fourth graph representing operation of the vehicle in the second scenario shown in Figure 5 with the exhaust heating setpoint modified dynamically in dependence on the vehicle operating condition in accordance with an embodiment of the present invention; and
Figure 8 shows a block diagram representing a method of controlling heating of the aftertreatment system in accordance with an embodiment of the present invention.

## DETAILED DESCRIPTION

A control system 1 for controlling heating of an aftertreatment system 3 in accordance with an embodiment of the present invention is described herein with reference to the accompanying Figures.

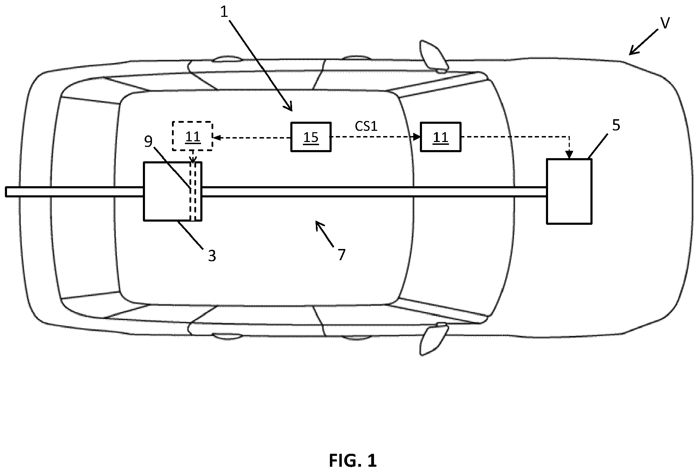

The aftertreatment system 3 is configured to treat the exhaust gas exhausted from an internal combustion engine 5. As shown in Figure 1, the engine 5 in the present embodiment is installed in a road vehicle V, such as an automobile, a utility vehicle or a sports utility vehicle. The engine 5 in the present embodiment is a compression ignition, reciprocating piston internal combustion engine. The engine 5 in the present embodiment is a diesel engine 5.

During operation of the engine 5, fuel is combusted in the combustion chambers (not shown) to drivingly rotate a crankshaft. The exhaust gas from the combustion process is conveyed through an exhaust system 7.

The aftertreatment system 3 is disposed in the exhaust system 7 and, in use, performs exhaust-gas treatment. The aftertreatment system 3 is configured to reduce the nitrogen oxide(s) (NOx) present in the exhaust gas. Nitrogen oxide(s) (NOx) include compounds such as NO, NO2 and NO3. In the present embodiment the aftertreatment system 3 is a selective catalytic reduction (SCR) system configured to reduce nitrogen oxide(s) (NOx) in the exhaust gas. The aftertreatment system 3 has a minimum effective temperature. Below the minimum effective temperature, the aftertreatment system 3 is less effective in removing nitrogen oxide(s) (NOx) from the exhaust gas. The operating temperature of the aftertreatment system 3 is maintained above the minimum effective temperature to promote effective removal of nitrogen oxide(s) (NOx) from the exhaust gas.

The operating temperature of the aftertreatment system 3 may be controlled indirectly by controlling the operation of the engine 5, for example selectively to increase a temperature of the exhaust gases introduced into the exhaust system 7. Alternatively, or in addition, the aftertreatment system 3 may comprise an electric heater 9 which may be selectively energized to heat the aftertreatment system 3. In this arrangement, a heater control unit 11 would control operation of the electric heater 9. The electric heater 9 and the heater control unit 11 are shown in dashed lines in Figure 1. In the present embodiment, the engine 5 is controlled to adjust the temperature of the exhaust gas.

The control system 1 is configured dynamically to set an exhaust heating setpoint HSP1 of the aftertreatment system 3. The exhaust heating setpoint HSP1 defines a target operating temperature for the aftertreatment system 3. The exhaust heating setpoint HSP1 is output as a control signal CS1 to an engine control unit 11 configured to control the operation of the engine 5 in dependence on the exhaust heating setpoint HSP1. For example, the engine control unit 11 may control the engine 5 to increase the exhaust gas temperature to increase the temperature of the aftertreatment system 3. In the present embodiment, the control system 1 is separate from the engine control unit 11. In a variant, the control system 1 may be incorporated into the engine control unit 11. The control system 1 is configured to determine the exhaust heating setpoint HSP1 in dependence on a determined driving condition of the vehicle V. As described herein, the driving condition of the vehicle V is modelled in dependence on one or more operating parameter. This approach is to avoid the incorrect or inappropriate setting of the exhaust heating setpoint HSP1.

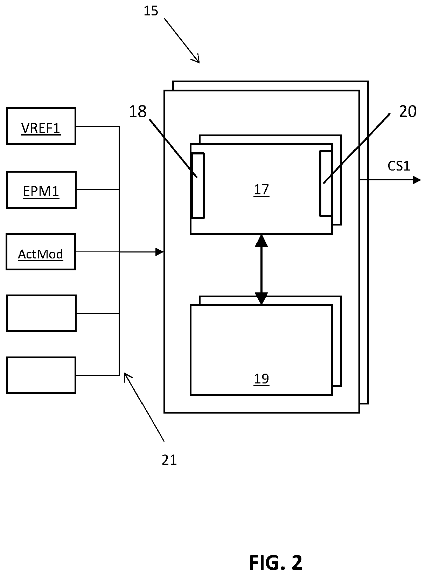

The control system 1 comprises a first controller 15. As shown schematically in Figure 2, the controller 15 comprises at least one electronic processor 17 and a first system memory 19. The at least one electronic processor 17 has at least one input 18 and at least one output 20. A set of computational instructions may be stored in the first system memory 19. When executed by the at least one electronic processor 17, the computational instructions cause the at least one electronic processor 17 to perform the method(s) described herein. The first controller 15 is in communication with a vehicle communication network 21, such as a CAN bus, to determine operating parameters of the vehicle V and the engine 5. For example, the first controller 15 may read a reference speed VREF1 of the first vehicle V1 and/or an engine speed EPM1 form the vehicle communication network 21. The reference speed VREF1 of the first vehicle V1 may, for example, be measured by one or more wheel speed sensors. In the present embodiment, the reference speed VREF1 Is measured in kilometres per hour (kph). The engine speed EPM1 is measured in revolutions per minute and may be calculated by the engine control unit 11 or measured by a sensor.

The controller 15 is configured to determine: an energy usage per unit time for the vehicle V; and an energy usage per unit distance. The energy usage per unit time represents the energy used by the vehicle 5 per unit time; and the energy usage per unit distance represents the work done to move the vehicle V per unit distance. In the present embodiment, the energy usage per unit time is defined in kilojoules per second (kJ/sec); and the energy usage per unit distance is defined in kilojoules per kilometre (kJ/km). It will be understood that different units of measurement may be used for the energy usage per unit time and/or the energy usage per unit distance without departing from the scope of the present invention. The energy usage per unit time (kJ/sec) can be determined as clutch energy per second, for example using the engine speed EPM1 and a torque at the clutch ActMod_trqClth. The torque at the clutch ActMod_trqClth may be modelled, for example by the engine control unit 11. The energy usage per unit distance (kJ/km) can be determined as clutch energy per km, for example using the engine speed EPM1, the torque at clutch ActMod and the vehicle reference speed VREF1 across a rolling distance. At least in certain embodiments, the rolling distance is calibratable. The controller 15 is configured to set the exhaust heating setpoint HSP1 for the aftertreatment system 3 in dependence on the determined energy usage per unit time (kJ/sec) and the energy usage per unit distance (kJ/km).

The energy usage of the vehicle may be determined as follows:

$$\text{Energy (kJ)}= \int(\text{engine speed}*\text{torque}/1000)$$

Where:

    engine speed is measured in radians per second (rad/s);
    torque in Newton metres (Nm); and

integral is from 0 to n.

The controller 15 is configured to determine the energy usage per unit distance (kJ/km) in respect of a first distance D1 travelled by the vehicle V; and to determine the energy usage per unit time (kJ/sec) in respect of a first time period T1. In the present embodiment, the first time period T1 corresponds to the time period during which the vehicle travelled the first distance D1. The energy usage per unit distance (kJ/km) and the energy usage per unit time (kJ/sec) are determined in respect of the same operating conditions of the vehicle V. The controller 15 is configured to set the exhaust heating setpoint HSP1 for the aftertreatment system 3 after the vehicle V has travelled a predetermined minimum distance in a current journey. A default or standard exhaust heating setpoint HSP1 may be applied until the vehicle V has travelled the predetermined minimum distance.

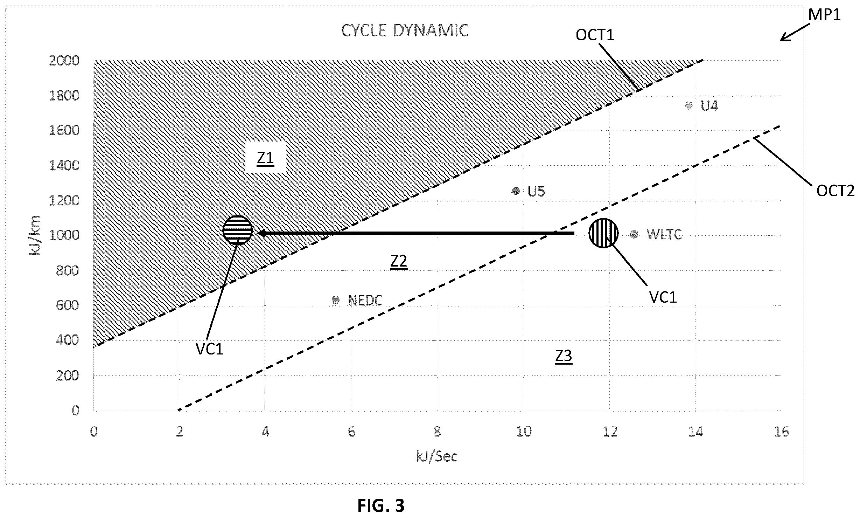

The controller 15 comprises a driving condition map MP1. The driving condition map MP1 defines a relationship between energy usage per unit time (kJ/sec) for the vehicle V and the energy usage per unit distance (kJ/km). A schematic representation of the driving condition map MP1 is shown in Figure 3. The driving condition map MP1 plots the energy usage per unit time (kJ/sec) on the X-axis; and the energy usage per unit distance (kJ/km) on the Y-axis. The exhaust heating setpoint HSP1 is mapped to the driving condition map MP1. The exhaust heating setpoint HSP1 may, for example, be plotted on a Z-axis of the driving condition map MP1.

The magnitude of the exhaust heating setpoint HSP1 changes within the driving condition map MP1. In the present embodiment, the exhaust heating setpoint HSP1 is interpolated in dependence on a plurality of predefined nodes within the driving condition map MP1. The nodes may, for example, define the magnitude of the exhaust heating setpoint HSP1 at known intervals or values of the energy usage per unit time (kJ/sec) and the energy usage per unit distance (kJ/km). The interpolation in the present embodiment is performed by a linear interpolator. This may facilitate representation of the driving condition map MP1 at a lower resolution to reduce the computational requirements. The exhaust heating setpoint HSP1 in respect of the determined energy usage per unit time (kJ/sec) and the determined energy usage per unit distance (kJ/km) may be interpolated in dependence on the magnitude of the adjacent nodes. A smoothing function may be implemented progressively to change the exhaust heating setpoint HSP1.

The exhaust heating setpoint HSP1 in the present embodiment changes progressively within the driving condition map MP1 in dependence on the energy usage per unit time (kJ/sec) and the energy usage per unit distance (kJ/km). The driving condition map MP1 may be represented in a three-dimensional space, for example in the above-referenced Cartesian coordinate system comprising X, Y and Z axes. The exhaust heating setpoint HSP1 may be represented within the three-dimensional space as a substantially continuous virtual surface. The virtual surface may comprise or consist of a curved profile. The curved profile may curve in two- or three-dimensions. The curves may be at least substantially continuous (i.e., at least substantially without interruptions or discontinuities). The exhaust heating setpoint HSP1 changes progressively in dependence on changes in the energy usage per unit time (kJ/sec) and the energy usage per unit distance (kJ/km). The exhaust heating setpoint HSP1 may be determined by identifying a magnitude of a point on the virtual surface for a given energy usage per unit time (kJ/sec) and energy usage per unit distance (kJ/km).

Alternatively, or in addition, the exhaust heating setpoint HSP1 may undergo step changes within the driving condition map MP1 in dependence on the energy usage per unit time (kJ/sec) and the energy usage per unit distance (kJ/km). The driving condition map MP1 may be represented in a three-dimensional space, for example in the above-referenced Cartesian coordinate system comprising X, Y and Z axes. The exhaust heating setpoint HSP1 may be represented within the three-dimensional space as a virtual surface comprising one or more steps. The virtual surface may comprise or consist of a stepped profile, for example comprising two or more surfaces which are offset from each other. The step changes in the virtual surface may be formed in two- or three-dimensions. The exhaust heating setpoint HSP1 may be determined by identifying a magnitude of a point on the virtual surface for a given energy usage per unit time (kJ/sec) and energy usage per unit distance (kJ/km).

The driving condition map MP1 comprises a plurality of zones representing different driving conditions. A first zone Z1 of the driving condition map MP1 represents driving conditions resulting in relatively high nitrogen oxide(s) (NOx) emissions. The first zone Z1 of the driving condition map MP1 may, for example, represent driving conditions in which the emissions of nitrogen oxide(s) (NOx) are above a threshold emission level for nitrogen oxide(s) (NOx). As shown in Figure 3, the first zone Z1 is demarcated by a first operating condition threshold OCT1. The first zone Z1 represents vehicle operating conditions having increased emissions of nitrogen oxide(s) (NOx). The first zone Z1 may, for example, represent vehicle operating conditions comprising low speed operation and high acceleration rate cycles. These result in a low energy usage per unit time (kJ/sec) and a high energy usage per unit distance (kJ/km).

These conditions may result in a decrease in the operating temperature of the aftertreatment system 3, potentially below the minimum effective temperature. This could reduce the ability of the aftertreatment system 3 to remove nitrogen oxide(s) (NOx) from the exhaust gas. To counter any such decrease in the operating temperature of the aftertreatment system 3, the driving condition map MP1 defines a higher exhaust heating setpoint HSP1 in the first zone Z1. The exhaust heating setpoint HSP1 is defined in dependence on the low energy usage per unit time (kJ/sec) and the high energy usage per unit distance (kJ/km). The exhaust heating setpoint HSP1 may increase within in the first zone Z1.

For example, the exhaust heating setpoint HSP1 may increase in dependence on a distance from the first operating condition threshold OCT1.

A second zone Z2 of the driving condition map MP1 represents driving conditions where there are relatively low emissions of nitrogen oxide(s) (NOx). The second zone Z2 of the driving condition map MP1 may, for example, represent driving conditions in which the nitrogen oxide(s) (NOx) emissions are below a threshold emission level for nitrogen oxide(s) (NOx). As shown in Figure 3, the second zone Z2 is demarcated by the first operating condition threshold OCT1 and optionally by a second operating condition threshold OCT2. The second zone Z2 represents vehicle operating conditions where the operating temperature of the aftertreatment system 3 is greater than the minimum effective temperature. As such, the aftertreatment system 3 is effective in removing the nitrogen oxide(s) (NOx) emissions from the exhaust gas. The driving condition map MP1 defines a reference exhaust heating setpoint HSP2 in the second zone Z2. The exhaust heating setpoint HSP2 in the second zone Z2 is less than the exhaust heating setpoint HSP1 in the first zone Z1. The exhaust heating setpoint HSP1 may be substantially constant within the second zone Z2.

A third zone Z3 of the driving condition map MP1 represents driving conditions having relatively low emissions of nitrogen oxide(s) (NOx) and relatively high emissions of carbon dioxide ($CO_2$). The third zone Z3 of the driving condition map MP1 may, for example, represent driving conditions in which the emissions of nitrogen oxide(s) (NOx) are below a threshold emission level for nitrogen oxide(s) (NOx); and the carbon dioxide ($CO_2$) emissions are above a threshold emission level for carbon dioxide ($CO_2$). As shown in Figure 3, the second zone Z3 is demarcated by the second operating condition threshold OCT2. The operating conditions of the vehicle V in the third zone Z3 will typically result in the engine 5 being controlled to increase the exhaust gas temperature unnecessarily, thereby resulting an increase in the carbon dioxide ($CO_2$) emissions.

In use, the controller 15 is configured to determine the exhaust heating setpoint HSP1 by cross-referencing the determined energy usage per unit time (kJ/sec) and the determined energy usage per unit distance (kJ/km) to the driving condition map MP1. The controller 15 references the driving condition map MP1 to determine the exhaust heating setpoint HSP1. In particular, the exhaust heating setpoint HSP1 for the determined energy usage per unit time (kJ/sec) and energy usage per unit distance (kJ/km) is read from the driving condition map MP1. The exhaust heating setpoint HSP1 in the present embodiment is derived in dependence on empirical test work. The controller 15 outputs the exhaust heating setpoint HSP1 is to an engine control unit 11. The engine control unit 11 controls the engine 5 in dependence on the exhaust heating setpoint HSP1. By way of example, if the controller 15 determines that the vehicle operating conditions correspond to the first zone Z1 of the driving condition map MP1, a higher exhaust heating setpoint HSP1 is defined. The exhaust heating setpoint HSP1 is output to the engine control unit 11. The engine control unit 11 controls the engine 5 to increase the temperature of the exhaust gas, thereby increasing the operating temperature of the aftertreatment system 3. The increased operating temperature of the aftertreatment system 3 promotes removal of nitrogen oxide(s) (NOx) from the exhaust gas. The controller 15 may thereby at least partially compensate for an increase in the nitrogen oxide(s) (NOx) due to adverse vehicle operating conditions. At least in certain embodiments, by monitoring the energy usage per unit time (kJ/sec) and the energy usage per unit distance (kJ/km), the controller 15 may preemptively adjust the exhaust heating setpoint HSP1 at least partially to compensate for changes in the operating temperature of the aftertreatment system 3.

The operation of the control system 1 will now be described with reference to first and second scenarios representing different driving conditions for the vehicle V.

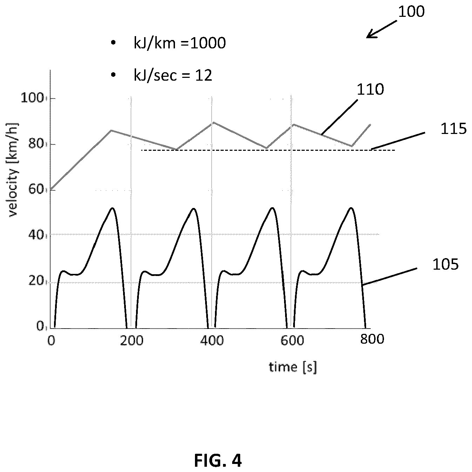

A first scenario is illustrated in a first graph 100 shown in Figure 4. The driving conditions in the first scenario correspond to the vehicle V operating in the first zone Z1 in the driving condition map MP1. The vehicle driving conditions are represented by a first circular element VC1 in Figure 3. A first plot 105 represents the velocity (km/h) of the vehicle V with respect to time (sec). A second plot 110 represents the operating temperature of the aftertreatment system 3. The minimum effective temperature of the aftertreatment system 3 is represented by a third plot 115. In the present example, the energy usage per unit distance (kJ/km) is 1000 kJ/km; and the energy usage per unit time (kJ/sec) is 12 kJ/km. The energy usage per unit distance (kJ/km) is determined in dependence on the velocity (km/h) of the vehicle V. The energy usage per unit distance (kJ/km) effectively represents the work done to move the vehicle V per kilometre with that speed profile. The temperature of the exhaust gases increases in conjunction with the increases in the vehicle speed (km/h) due to the higher energy usage per unit distance (kJ/km). The increased temperature of the exhaust gases causes a corresponding increase in the operating temperature of the aftertreatment system 3, as represented by the peaks in the second plot 110. The cyclical increases in the velocity (km/h), at the 3rd, 6th, 9th and 12th peaks, increase the temperature of the exhaust gases. The low-speed driving between the peaks is insufficient to maintain the heat generated during the previous peak. As a result the exhaust temperature drops during the lower speed phases. The heating strategy is defined to ensure that the temperature of the aftertreatment system 3 does not drop below the minimum effective threshold represented by the third plot 115.

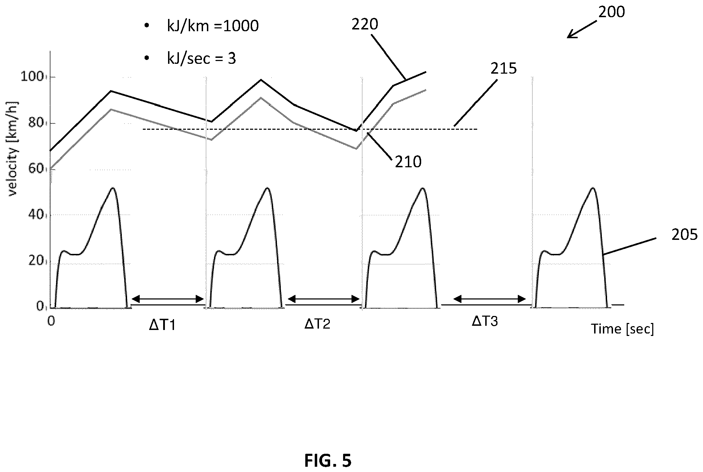

A second scenario is illustrated in a second graph 200 shown in Figure 5. The driving conditions in the first scenario correspond to the vehicle V operating in the second zone Z2 or the third zone Z3 in the driving condition map MP1. The vehicle driving conditions are represented by a second circular element VC2 in Figure 3. A first plot 205 represents the velocity (km/h) of the vehicle V with respect to time (sec). A second plot 210 represents the operating temperature of the aftertreatment system 3. The minimum effective temperature of the aftertreatment system 3 is represented by a third plot 215. A fourth plot 220 represents the exhaust heating setpoint HSP1. The present scenario is representative of the vehicle V travelling in a congested area. In this scenario, the vehicle V is periodically stationary or travelling at very low speed, as represented by the increased periods of low-speed operation between the sets of (three) peaks. The engine 5 is operating at idle (or may be deactivated) for an increased period of time compared to the first scenario. The engine 5 may, for example, idle (or may be deactivated) for one or more periods of time $\Delta T$. In the scenario illustrated in Figure 5, the engine 5 is idling for a first time period $\Delta T1$, a second time period $\Delta T2$ and a third time period $\Delta T3$. For the purposes of comparison, the energy usage per unit distance (kJ/km) is unchanged from the first scenario. However, the energy usage per unit time (kJ/sec) is reduced. In the present example, the energy usage per unit distance (kJ/km) is 1000 kJ/km; and the energy usage per unit time (kJ/sec) is 3 kJ/km. The energy usage per unit distance (kJ/km) is determined in dependence on the velocity (km/h) of the vehicle V. The energy usage per unit distance (kJ/km) effectively represents the work done to move the vehicle V per kilometre with that speed profile. The reduced energy usage per unit time (kJ/sec) results in a decrease in the exhaust temperature, particularly during the low-speed operation of the vehicle V. There is a corresponding decrease in the temperature of the aftertreatment system 3. If the temperature of the aftertreatment system 3 decreases below the minimum effective threshold, the treatment of the nitrogen oxide(s) (NOx) is reduced and there are increased tailpipe emissions. To ensure compliance in these driving conditions, the exhaust heating setpoint HSP1 is set higher, as represented by the fourth plot 220. The exhaust heating setpoint HSP1 is output to the engine control unit 11 which controls the engine 5 to achieve a higher exhaust gas temperature, thereby maintaining the temperature of the aftertreatment system 3 above the minimum effective temperature of the aftertreatment system 3. The heating strategy is defined to ensure that the temperature of the aftertreatment system 3 does not drop below the minimum effective threshold represented by the third plot 115. This maintains robust operation of the aftertreatment system 3 in the second scenario.

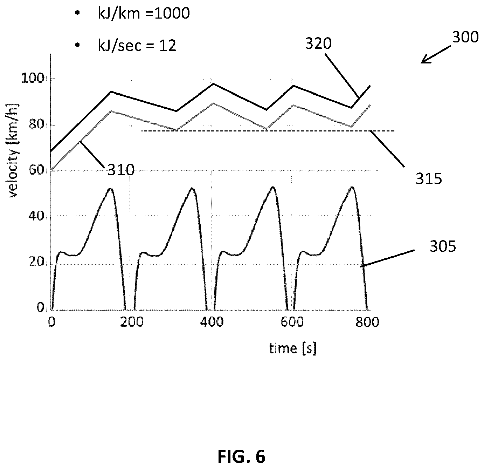

In a conventional control strategy, the exhaust heating setpoint HSP1 is increased without taking account of the changes in the energy usage per unit time (kJ/sec). The exhaust heating setpoint HSP1 would be increased for all possible driving conditions to ensure that the temperature of the aftertreatment system 3 does not decrease below the minimum effective temperature. The resulting changes to the operation of the engine 5 result in an increase in the carbon dioxide ($CO_2$) emissions and a reduction in the fuel economy in all operating conditions. This is illustrated with reference to a third graph 300 shown in Figure 6. The third graph 300 represents operation of the vehicle V according to the same driving conditions as the first scenario illustrated by the first graph 100 shown in Figure 4. The third graph 300 illustrates operation of the vehicle V with the increased exhaust heating setpoint HSP1. A first plot 305 represents the velocity (km/h) of the vehicle V with respect to time (sec). A second plot 310 represents the operating temperature of the aftertreatment system 3. The minimum effective temperature of the aftertreatment system 3 is represented by a third plot 315. A fourth plot 320 represents the exhaust heating setpoint HSP1. In this scenario, the exhaust heating setpoint HSP1 (represented by the fourth plot 320) is elevated even though the operating temperature of the aftertreatment system 3 (represented by the second plot 310) is greater than the minimum effective temperature of the aftertreatment system 3. Accordingly, the engine 5 is controlled to increase the exhaust gas temperature, potentially resulting in an increase in carbon dioxide ($CO_2$) emissions.

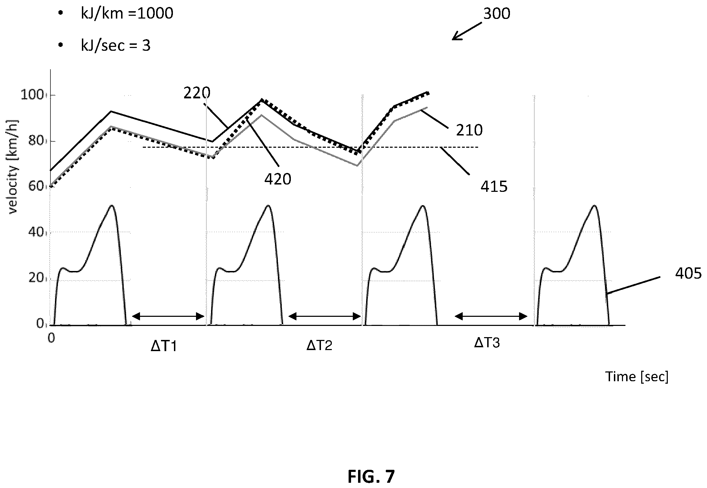

As described herein, the controller 15 in accordance with an embodiment of the present invention is configured to set the exhaust heating setpoint HSP1 in dependence on both the energy usage per unit time (kJ/sec) and the energy usage per unit distance (kJ/km). The exhaust heating setpoint HSP1 is thereby increased dynamically in dependence on the current driving conditions. The operation of the controller 15 is illustrated with reference to a fourth graph 400 shown in Figure 7. The fourth graph 400 represents operation of the vehicle V according to the same driving conditions as the second scenario illustrated by the second graph 200 shown in Figure 5. The engine 5 is operating at idle (or may be deactivated) for an increased period of time compared to the first scenario. The engine 5 may, for example, idle (or may be deactivated) for one or more periods of time $\Delta T$. In the scenario illustrated in Figure 7, the engine 5 is idling for a first time period $\Delta T1$, a second time period $\Delta T2$ and a third time period $\Delta T3$. The fourth graph 400 illustrates operation of the vehicle V with a dynamically adjusted exhaust heating setpoint HSP1. A first plot 405 represents the velocity (km/h) of the vehicle V with respect to time (sec). A second plot 410 represents the operating temperature of the aftertreatment system 3. The minimum effective temperature of the aftertreatment system 3 is represented by a third plot 415. A fourth plot 420 represents the exhaust heating setpoint HSP1. In this scenario, the controller 15 differentiates between operating conditions corresponding to two or more of the first, second and third zones Z1, Z2, Z3 defined within the exhaust heating setpoint HSP1. As a result, the controller 15 increases the exhaust heating setpoint HSP1 only when the current driving conditions require a change. To facilitate comparison, the second plot 210 and the fourth plot 220 from the second graph 200 are shown in the fourth graph 400.

The controller 15 is configured dynamically to control the exhaust heating setpoint HSP1 in dependence on the determined driving conditions. At least in certain embodiments, this ensures that temperature of the aftertreatment system 3 is maintained above the minimum effective temperature whilst avoiding unnecessary heating which may result in an increase in carbon dioxide (CO2) emissions.

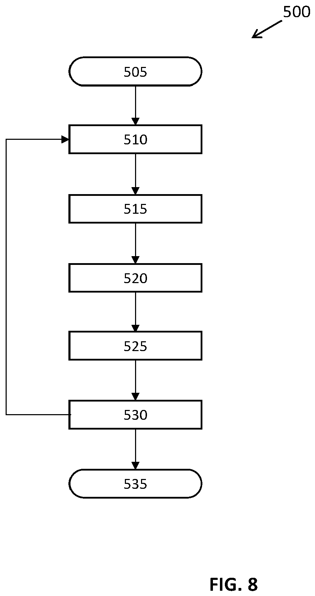

A block diagram 500 representing a method of controlling heating of the aftertreatment system 3 in accordance with an embodiment of the present invention is shown in Figure 8. As described herein, the aftertreatment system 3 is configured to treat exhaust gas emitted from the internal combustion engine 5 of the vehicle V. The engine 5 is activated (BLOCK 505). The method comprises determining an energy usage per unit time for the vehicle V (BLOCK 510). The method comprises determining an energy usage per unit distance travelled by the vehicle V (BLOCK 515). The exhaust heating setpoint HSP1 for the aftertreatment system 3 is set in dependence on the determined energy usage per unit time and the energy usage per unit distance (BLOCK 520). The exhaust heating setpoint HSP1 defines a target operating temperature for the aftertreatment system 3 to treat the exhaust gas discharged from the engine 5. At least in certain embodiments, the exhaust heating setpoint HSP1 is defined to balance treatment of the nitrogen oxide(s) (NOX) and carbon dioxide (CO2) in the exhaust gas. As described herein, the controller 15 may access a driving condition map MP1 to determine the heating setpoint HSP1. The exhaust heating setpoint HSP1 is output to the engine control unit 11 (BLOCK 525). The engine control unit 11 controls operation of the engine 5 in dependence on the exhaust heating setpoint HSP1 (BLOCK 530). In particular, the engine control unit 11 controls operation of the engine 5 to increase or decrease the temperature of the exhaust gas. The temperature of the aftertreatment system 3 may thereby be modified in dependence on the exhaust heating setpoint HSP1. The energy usage per unit distance and the energy usage per unit time are monitored during operation of the engine 5. The exhaust heating setpoint HSP1 may be adjusted dynamically during operation of the engine 5, for example in dependence on changes in the energy usage per unit distance and the energy usage per unit time. The engine 5 is de-activated (BLOCK 535).

It will be appreciated that various changes and modifications can be made to the present invention without departing from the scope of the present application.

In a variant, one or more algorithms may define the relationship between the exhaust heating setpoint HSP1, the energy usage per unit time and the energy usage per unit distance. The one or more algorithms may define the exhaust heating setpoint HSP1 as being inversely proportional to the determined energy usage per unit time; and the exhaust heating setpoint HSP1 as being directly proportion to the determined energy usage per unit distance.

**LABELS FOR BLOCK DIAGRAM 500**

| 505 | ENGINE START |
|-----|--------------|
| 510 | DETERMINE ENERGY USAGE PER UNIT TIME |
| 515 | DETERMINE ENERGY USAGE PER UNIT DISTANCE |
| 520 | DETERMINE EXHAUST HEATING SETPOINT |
| 525 | OUTPUT EXHAUST HEATING SETPOINT TO ENGINE CONTROL UNIT |
| 530 | CONTROL ENGINE IN DEPENDENCE ON EXHAUST HEATING SETPOINT |
| 535 | ENGINE STOP |

**Claims**

1. A control system (1) for controlling heating of an aftertreatment system (3) for treating exhaust gas emitted from an internal combustion engine (5) of a vehicle (V), the control system (1) comprising at least one controller (15) configured to:

   determine an energy usage per unit time for the vehicle (V);
   determine an energy usage per unit distance travelled by the vehicle (V); and
   set an exhaust heating setpoint (HSP1) for the aftertreatment system (3) in dependence on the determined energy usage per unit time and the energy usage per unit distance.

2. A control system (1) as claimed in claim 1, wherein the at least one controller (15) is configured to output the exhaust heating setpoint (HSP1) to an engine (5) control unit for controlling operation of the internal combustion engine (5) to control heating of the aftertreatment system (3).

3. A control system (1) as claimed in claim 1 or claim 2, wherein the at least one controller (15) is configured to output the exhaust heating setpoint (HSP1) to a heater control unit to control heating of the aftertreatment system (3).

4. A control system (1) as claimed in any one of claims 1, 2 or 3, wherein the at least one controller (15) is configured to determine the energy usage per unit distance in respect of a first distance travelled by the vehicle (V); and to determine the energy usage per unit time in respect of a first time period; wherein the first time period corresponds to the time period during which the vehicle (V) travelled the first distance.

5. A control system (1) as claimed in any one of the preceding claims, wherein the at least one controller (15) is configured to set the exhaust heating setpoint (HSP1) for the aftertreatment system (3) in inverse proportion to the determined energy usage per unit time and in direct proportion to the determined energy usage per unit distance.

6. A control system (1) as claimed in any one of the preceding claims, wherein the at least one controller (15) comprises a driving condition map (MP1) defining a relationship between the energy usage per unit time and the energy usage per unit distance.

7. A control system (1) as claimed in claim 6, wherein the exhaust heating setpoint (HSP1) is mapped to the driving condition map (MP1), the at least one controller (15) being configured to determine the exhaust heating setpoint (HSP1) by cross-referencing the determined energy usage per unit time and the determined energy usage per unit distance to the driving condition map (MP1).

8. A control system (1) as claimed in claim 6 or claim 7, wherein the driving condition map (MP1) defines a first zone (Z1) representing vehicle (V) operating conditions where there are relatively high emissions of nitrogen oxide(s).

9. A control system (1) as claimed in claim 8, wherein the at least one controller (15) is configured to increase the exhaust heating setpoint (HSP1) in dependence on identifying that the current driving condition map (MP1) corresponds to the first zone (Z1) of the driving condition map (MP1).

10. A control system (1) as claimed in claim 6, wherein the at least one controller (15) is configured to reference the driving condition map (MP1) to characterise a current driving condition of the vehicle (V) in dependence on the energy usage per unit time and the energy usage per unit distance, and optionally
wherein the driving condition map (MP1) defines at least a first driving condition threshold representing vehicle (V) operating conditions; the at least one controller (15) being configured to apply a control function to set the exhaust heating setpoint (HSP1) in dependence on a difference between the current driving condition and the first driving condition threshold.

11. A control system (1) as claimed in any one of the preceding claims, wherein the at least one controller (15) set the exhaust heating setpoint (HSP1) for the aftertreatment system (3) after the vehicle (V) has travelled a predetermined minimum distance in a current journey.

12. A control system (1) as claimed in any one of the preceding claims, wherein the at least one controller (15) comprises at least one electronic processor and a system memory; the at least one electronic processor comprising at least one input (VREF1, EPM1, ActMod) for receiving one or more vehicle (V) operating parameter; and at least one output (CS1) for outputting the exhaust heating setpoint (HSP1).

13. A vehicle (V) comprising a control system (1) as claimed according to any one of the preceding claims.

14. A method of controlling heating of an aftertreatment system (3) for treating exhaust gas emitted from an internal combustion engine (5) of a vehicle (V), the method comprising:

   determining an energy usage per unit time for the vehicle (V);
   determining an energy usage per unit distance travelled by the vehicle (V); and
   setting an exhaust heating setpoint (HSP1) for the aftertreatment system (3) in dependence on the determined energy usage per unit time and the energy usage per unit distance.

15. A non-transitory computer-readable medium having a set of instructions stored therein which, when executed, cause a processor to perform the method(s) claimed in claim 14.

**Patentansprüche**

1. Steuersystem (1) zum Steuern einer Erwärmung eines Nachbehandlungssystems (3) zum Behandeln von Abgas, das von einem Verbrennungsmotor (5) eines Fahrzeugs (V) ausgestoßen wird, das Steuersystem (1) umfassend mindestens eine Steuerung(15), die konfiguriert ist zum:

   Bestimmen eines Energieverbrauchs pro Zeiteinheit für das Fahrzeug (V);
   Bestimmen eines Energieverbrauchs pro Entfernungseinheit , die durch das Fahrzeug (V) zurückgelegt wird; und
   Einstellen eines Abgaserwärmungssollwerts (HSP1) für das Nachbehandlungssystem (3) in Abhängigkeit von dem bestimmten Energieverbrauch pro Zeiteinheit und dem Energieverbrauch pro Entfernungseinheit.

2. Steuersystem (1) nach Anspruch 1, wobei die mindestens eine Steuerung (15) konfiguriert ist, um den Abgaserwärmungssollwert (HSP1) an eine Steuereinheit eines Motors (5) zum Steuern des Betriebs des Verbrennungsmotors (5) auszugeben, um die Erwärmung des Nachbehandlungssystems (3) zu steuern.

3. Steuersystem (1) nach Anspruch 1 oder 2, wobei die mindestens eine Steuerung (15) konfiguriert ist, um den Abgaserwärmungssollwert (HSP1) an eine Erwärmungssteuereinheit auszugeben, um die Erwärmung des Nachbehandlungssystems (3) zu steuern.

4. Steuersystem (1) nach einem der Ansprüche 1, 2 oder 3, wobei die mindestens eine Steuerung (15) konfiguriert ist, um den Energieverbrauch pro Entfernungseinheit in Bezug auf eine erste Entfernung zu bestimmen, die durch das Fahrzeug (V) zurückgelegt wird; und um den Energieverbrauch pro Zeiteinheit in Bezug auf einen ersten Zeitraum zu bestimmen; wobei der erste Zeitraum dem Zeitraum entspricht, während dem das Fahrzeug (V) die erste Distanz zurücklegt.

5. Steuersystem (1) nach einem der vorstehenden Ansprüche, wobei die mindestens eine Steuerung (15) konfiguriert ist, um den Abgaserwärmungssollwert (HSP1) für das Nachbehandlungssystem (3) in umgekehrtem Verhältnis zu dem bestimmten Energieverbrauch pro Zeiteinheit und in direktem Verhältnis zu dem bestimmten Energieverbrauch pro Entfernungseinheit einzustellen.

6. Steuersystem (1) nach einem der vorstehenden Ansprüche, wobei die mindestens eine Steuerung (15) ein Fahrzustandskennfeld (MP1) umfasst, das eine Beziehung zwischen dem Energieverbrauch pro Zeiteinheit und dem Energieverbrauch pro Entfernungseinheit definiert.

7. Steuersystem (1) nach Anspruch 6, wobei der Abgaserwärmungssollwert (HSP1) auf das Fahrzustandskennfeld (MP1) abgebildet ist, wobei die mindestens eine Steuerung (15) konfiguriert ist, um den Abgaserwärmungssollwert (HSP1) durch einen Querverweis des bestimmten Energieverbrauchs pro Zeiteinheit und des bestimmten Energieverbrauchs pro Entfernungseinheit auf das Fahrzustandskennfeld (MP1) zu bestimmen.

8. Steuersystem (1) nach Anspruch 6 oder 7, wobei das Fahrzustandskennfeld (MP1) eine erste Zone (Z1) definiert, die Betriebsbedingungen des Fahrzeugs (V) darstellt, bei denen relativ hohe Stickoxidemissionen auftreten.

9. Steuersystem (1) nach Anspruch 8, wobei die mindestens eine Steuerung (15) konfiguriert ist, um den Abgaserwärmungssollwert (HSP1) in Abhängigkeit von dem Identifizieren zu erhöhen, dass das aktuelle Fahrzustandskennfeld (MP1) der ersten Zone (Z1) des Fahrzustandskennfelds (MP1) entspricht.

10. Steuersystem (1) nach Anspruch 6, wobei die mindestens eine Steuerung (15) konfiguriert ist, um auf das Fahrzustandskennfeld (MP1) zu verweisen, um einen aktuellen Fahrzustand des Fahrzeugs (V) in Abhängigkeit von dem Energieverbrauch pro Zeiteinheit und von dem Energieverbrauch pro Entfernungseinheit zu charakterisieren, und optional
   wobei das Fahrzustandskennfeld (MP1) mindestens einen ersten Fahrzustandsschwellenwert definiert, der die Betriebsbedingungen des Fahrzeugs (V) darstellt; die mindestens eine Steuerung (15) konfiguriert ist, um eine Steuerfunktion anzuwenden, um den Abgaserwärmungssollwert (HSP1) in Abhängigkeit von einem Unterschied zwischen dem aktuellen Fahrzustand und dem ersten Fahrzustandsschwellenwert einzustellen.

11. Steuersystem (1) nach einem der vorstehenden Ansprüche, wobei die mindestens eine Steuerung (15) den Abgaserwärmungssollwert (HSP1) für das Nachbehandlungssystem (3) einstellt, nachdem das Fahrzeug (V) eine zuvor bestimmte Mindestdistanz in einer aktuellen Fahrt zurückgelegt hat.

**12.** Steuersystem (1) nach einem der vorstehenden Ansprüche, wobei die mindestens eine Steuerung (15) mindestens einen elektronischen Prozessor und einen Systemspeicher umfasst; der mindestens eine elektronische Prozessor umfassend mindestens einen Eingang (VREF1, EPM1, ActMod) zum Empfangen eines oder mehrerer Betriebsparameter des Fahrzeugs (V); und mindestens einen Ausgang (CS1) zum Ausgeben des Abgaserwärmungssollwerts (HSP1).

**13.** Fahrzeug (V), umfassend ein Steuersystem (1) nach einem der vorstehenden Ansprüche.

**14.** Verfahren zum Steuern der Erwärmung eines Nachbehandlungssystems (3) zum Behandeln von Abgas, das von einem Verbrennungsmotor (5) eines Fahrzeugs (V) ausgestoßen wird, das Verfahren umfassend:

Bestimmen eines Energieverbrauchs pro Zeiteinheit für das Fahrzeug (V);
Bestimmen eines Energieverbrauchs pro Entfernungseinheit, die durch das Fahrzeug (V) zurückgelegt wird; und
Einstellen eines Abgaserwärmungssollwerts (HSP1) für das Nachbehandlungssystem (3) in Abhängigkeit von dem bestimmten Energieverbrauch pro Zeiteinheit und dem Energieverbrauch pro Entfernungseinheit.

**15.** Nichtflüchtiges computerlesbares Medium, das einen Satz von Anweisungen aufweist, die darin gespeichert sind, die, wenn sie ausgeführt werden, einen Prozessor veranlassen, das/die Verfahren nach Anspruch 14 durchzuführen.

**Revendications**

**1.** Système de commande (1) permettant de commander le chauffage d'un système de post-traitement (3) permettant de traiter du gaz d'échappement émis à partir d'un moteur à combustion interne (5) d'un véhicule (V), le système de commande (1) comprenant au moins un dispositif de commande (15) configuré pour :

déterminer une utilisation d'énergie par unité de temps pour le véhicule (V) ;
déterminer une utilisation d'énergie par unité de distance parcourue par le véhicule (V) ; et
régler un point de consigne de chauffage d'échappement (HSP1) pour le système de post-traitement (3) en dépendance de l'utilisation d'énergie par unité de temps déterminée et de l'utilisation d'énergie par unité de distance.

**2.** Système de commande (1) selon la revendication 1, dans lequel l'au moins un dispositif de commande (15) est configuré pour délivrer en sortie le point de consigne de chauffage d'échappement (HSP1) à une unité de commande d'un moteur (5) pour la commande de fonctionnement du moteur à combustion interne (5) pour commander le chauffage du système de post-traitement (3).

**3.** Système de commande (1) selon la revendication 1 ou la revendication 2, dans lequel l'au moins un dispositif de commande (15) est configuré pour délivrer en sortie le point de consigne de chauffage d'échappement (HSP1) à une unité de commande de dispositif de chauffage pour commander le chauffage du système de post-traitement (3).

**4.** Système de commande (1) selon l'une quelconque des revendications 1, 2 ou 3, dans lequel l'au moins un dispositif de commande (15) est configuré pour déterminer l'utilisation d'énergie par unité de distance par rapport à une première distance parcourue par le véhicule (V) ; et pour déterminer l'utilisation d'énergie par unité de temps par rapport à un premier laps de temps ; dans lequel le premier laps de temps correspond au laps de temps pendant lequel le véhicule (V) a parcouru la première distance.

**5.** Système de commande (1) selon l'une quelconque des revendications précédentes, dans lequel l'au moins un dispositif de commande (15) est configuré pour régler le point de consigne de chauffage d'échappement (HSP1) pour le système de post-traitement (3) en proportion inverse de l'utilisation d'énergie par unité de temps déterminée et en proportion directe de l'utilisation d'énergie par unité de distance déterminée.

**6.** Système de commande (1) selon l'une quelconque des revendications précédentes, dans lequel l'au moins un dispositif de commande (15) comprend une carte de condition de conduite (MP1) définissant une relation entre l'utilisation d'énergie par unité de temps et l'utilisation d'énergie par unité de distance.

**7.** Système de commande (1) selon la revendication 6, dans lequel le point de consigne de chauffage d'échappement (HSP1) est mise en correspondance avec la carte de condition de conduite (MP1), l'au moins un dispositif de commande (15) étant configuré pour déterminer le point de consigne de chauffage d'échappement (HSP1) par recoupement de l'utilisation d'énergie par unité de temps déterminée et de l'utilisation d'énergie par unité de distance déterminée avec la carte de condition de conduite (MP1).

8. Système de commande (1) selon la revendication 6 ou la revendication 7, dans lequel la carte de condition de conduite (MP1) définit une première zone (Z1) représentant les conditions de fonctionnement du véhicule (V) où il y a des émissions relativement élevées d'oxyde(s) d'azote.

9. Système de commande (1) selon la revendication 8, dans lequel l'au moins un dispositif de commande (15) est configuré pour augmenter le point de consigne de chauffage d'échappement (HSP1) en dépendance de l'identification que la carte de condition de conduite (MP1) actuelle correspond à la première zone (Z1) de la carte de condition de conduite (MP1).

10. Système de commande (1) selon la revendication 6, dans lequel l'au moins un dispositif de commande (15) est configuré pour faire référence à la carte de condition de conduite (MP1) pour caractériser une condition de conduite actuelle du véhicule (V) en dépendance de l'utilisation d'énergie par unité de temps et de l'utilisation d'énergie par unité de distance, et facultativement
dans lequel la carte de condition de conduite (MP1) définit au moins un premier seuil de condition de conduite représentant la condition de fonctionnement du véhicule (V) ; l'au moins un dispositif de commande (15) étant configuré pour appliquer une fonction de commande pour régler le point de consigne de chauffage d'échappement (HSP1) en dépendance d'une différence entre la condition de conduite actuelle et le premier seuil de condition de conduite.

11. Système de commande (1) selon l'une quelconque des revendications précédentes, dans lequel l'au moins un dispositif de commande (15) règle le point de consigne de chauffage d'échappement (HSP1) pour le système de post-traitement (3) après que le véhicule (V) a parcouru une distance minimale prédéterminée dans un trajet en cours.

12. Système de commande (1) selon l'une quelconque des revendications précédentes, dans lequel l'au moins un dispositif de commande (15) comprend au moins un processeur électronique et une mémoire système ; l'au moins un processeur électronique comprenant au moins une entrée (VREF1, EPM1, ActMod) permettant de recevoir un ou plusieurs paramètres de fonctionnement du véhicule (V) ; et au moins une sortie (CS1) permettant de délivrer en sortie le point de consigne de chauffage d'échappement (HSP1).

13. Véhicule (V) comprenant un système de commande (1) selon l'une quelconque des revendications précédentes.

14. Procédé de commande de chauffage d'un système de post-traitement (3) permettant de traiter un gaz d'échappement émis à partir d'un moteur à combustion interne (5) d'un véhicule (V), le procédé comprenant :

la détermination d'une utilisation d'énergie par unité de temps pour le véhicule (V) ;
la détermination d'une utilisation d'énergie par unité de distance parcourue par le véhicule (V) ; et
le réglage d'un point de consigne de chauffage d'échappement (HSP1) pour le système de post-traitement (3) en dépendance de l'utilisation d'énergie par unité de temps déterminée et de l'utilisation d'énergie par unité de distance.

15. Support non transitoire lisible par ordinateur ayant un ensemble d'instructions stockées à l'intérieur de celui-ci qui, lorsqu'elles sont exécutées, amènent un processeur à mettre en oeuvre le(s) procédé(s) selon la revendication 14.

**FIG. 1**

EP 4 249 735 B1

**FIG. 2**

FIG. 3

EP 4 249 735 B1

FIG. 4

FIG. 5

- kJ/km =1000
- kJ/sec = 12

FIG. 6

- kJ/km =1000
- kJ/sec = 3

300

**FIG. 7**

500

505

510

515

520

525

530

535

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 3109798 A1
- DE 102018208980 A1
- WO 2022051035 A1
- DE 102019008954 A1
- DE 102020103565 B4
- EP 3163042 B1